# EUROPEAN PATENT APPLICATION

(11) **EP 1 568 334 A2**
(43) Date of publication of application: **31.08.2005**
(21) Application number: 05251115.1
(22) Date of filing: 25.02.2005
(51) Int. Cl.: A61C 5/02

(54) **Endodontic instrument set and method of using the same**

(30) Priority: 25.02.2004 US 786658
(71) Applicant: Roane, James B., Oklahoma 73026 (US)
(72) Inventor: Roane, James B., Oklahoma 73026 (US)
(74) Representative: Nicholls, Michael John

(57) **Abstract**

An endodontic instrument set of progressively smaller sizes adapted for use in performing root canal therapy and a method of using the instrument set are provided. Each of the instruments have an elongated shaft comprising a proximal end and a distal end and a short enlarged continuously tapered working length formed on the shaft adjacent to the distal end. The short enlarged continuously tapered working length has at least one continuous cutting edge thereon.

## Description

The present invention relates to a set of instruments of progressively smaller sizes for use in performing root canal therapy and methods of using the instruments.

Root canal therapy is a procedure utilized by dentists to cure and repair a diseased tooth. The procedure involves the enlargement of the root canal in the tooth for the purpose of removing diseased organic and extraneous material present in the root canal so that it may be filled. In performing the procedure, an opening is cut in the crown of the tooth whereby the root canal of the tooth is exposed. Thereafter, small endodontic instruments, referred to as files, are utilized to clean, enlarge and shape the root canal. The intent in shaping the root canal is to make smooth canal walls and to provide a tapered canal shape which is larger in the coronal region and reduces in diameter towards the apex or foramina of the root canal. The tapered shape of the root canal allows the canal to be filled with materials that seal the canal.

The formation of a tapered canal has been accomplished by dentists in many different ways. A presently popular technique is to begin the shaping of the root canal at the coronal end and to gradually progress the shaping deeper in small increments. The instruments which are used are made in a variety of sizes whereby each instrument opens a portion of the root canal to the desired diameter. However, each instrument must be withdrawn many times from the root canal during the shaping procedure in order to establish a tapered canal form from the top to the bottom. The instruments currently used are long and have cutting edges along the lengths thereof to a small and fragile tip. The small tips are subject to fracture if they become engaged with the apical canal structure.

Thus, there are needs for improved endodontic instruments and sets thereof containing instruments of progressively smaller sizes for use in performing root canal therapy whereby the withdrawal of the instruments many times from the depth of each shaping pass is not required and the instruments do not have small fragile tips that are easily fractured.

The present invention provides an endodontic instrument, and set thereof of progressively small sizes, adapted for use in performing root canal therapy that meets the needs described above and overcomes the deficiencies of the prior art. The instrument does not require multiple outward strokes and the instrument does not have a small fragile tip that easily breaks.

The instrument set of this invention may include three or more instruments having progressively smaller sizes which can be quickly and easily used in root canal therapy. Each of the instruments has an elongated shaft comprising a proximal end and a distal end and a short enlarged continuously tapered working length formed on the shaft adjacent to the distal end. The short enlarged continuously tapered working length has at least one continuous cutting edge thereon.

A method of performing root canal therapy utilizing the set of instruments of the present invention comprises the following steps. A set of instruments having progressively smaller sizes is provided, each instrument having an elongated shaft comprising a proximal end, a distal end and a short enlarged continuously tapered working length formed on the shaft adjacent to the distal end. The short enlarged continuously tapered working length has at least one continuous cutting edge thereon. A first of the instruments is inserted in the coronal portion of the root canal and the instrument is rotated to enlarge the coronal portion into a short enlarged continuous taper of a size corresponding to the short enlarged continuously tapered working length of the first instrument. Thereafter, a second and one or more additional instruments having progressively smaller short enlarged continuously tapered working lengths are inserted in the root canal and each instrument is rotated to thereby enlarge the root canal to the foramina thereof into an enlarged continuous taper of a size corresponding to the short enlarged continuously tapered working lengths of the first, second and one or more additional instruments.

Other features and advantages of the present invention will be readily apparent to those skilled in the art upon a reading of the description of preferred embodiments which follows when taken in conjunction with the accompanying drawings, in which:

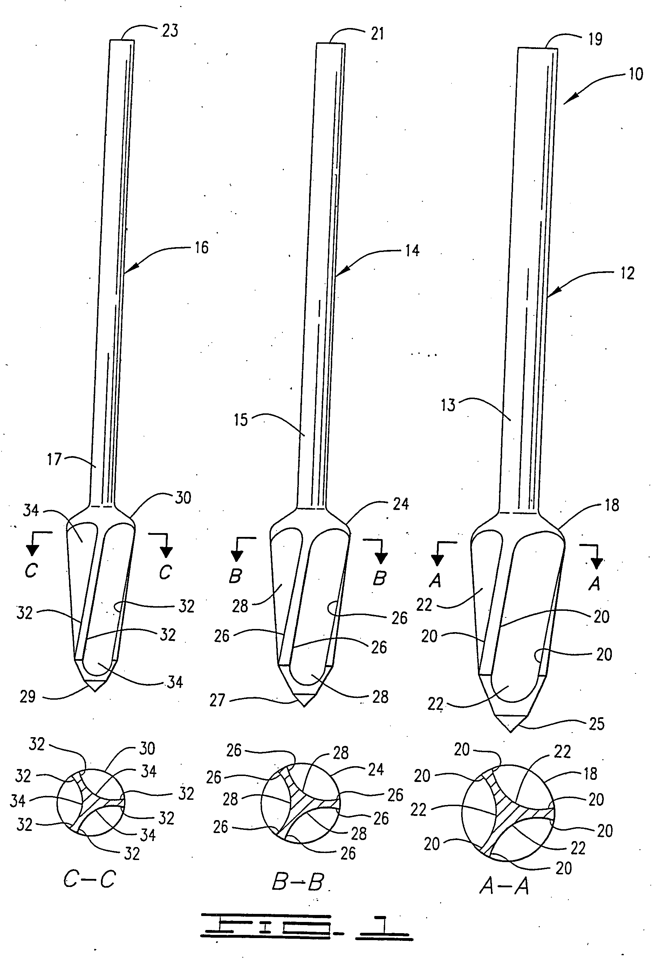

FIG. 1 is an enlarged side view of an endodontic instrument set of the present invention containing three instruments having six cutting edges formed by three angled flutes on the continuously tapered working lengths thereof including cross-sectional views of the cutting edges and flutes on the working lengths.

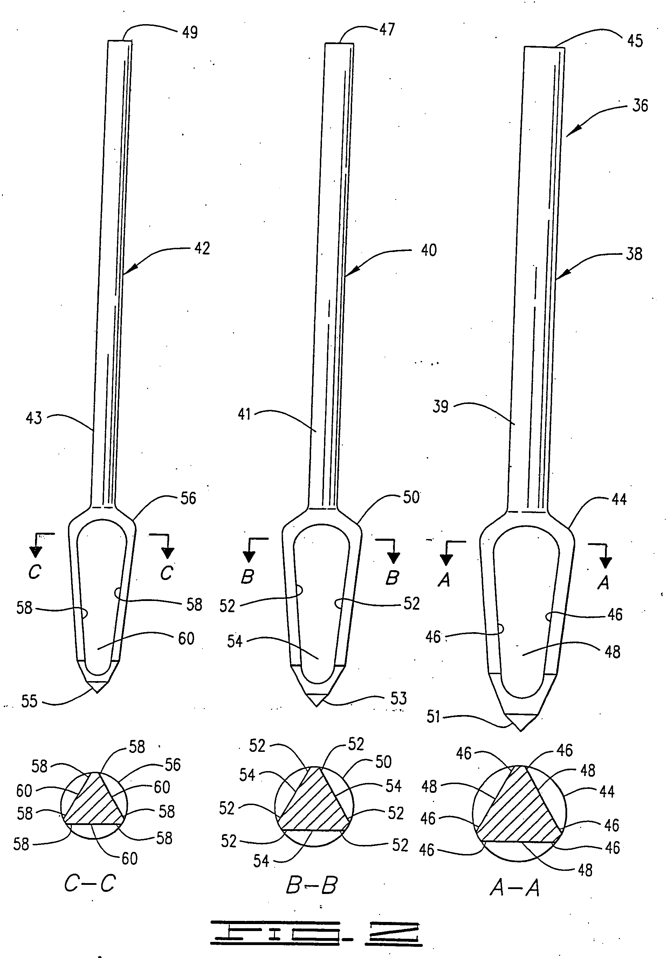

FIG. 2 is an enlarged side view of another endodontic instrument set of the present invention containing three instruments having six cutting edges formed by three vertical flutes on the continuously tapered working lengths thereof including cross-sectional views of the cutting edges and flutes.

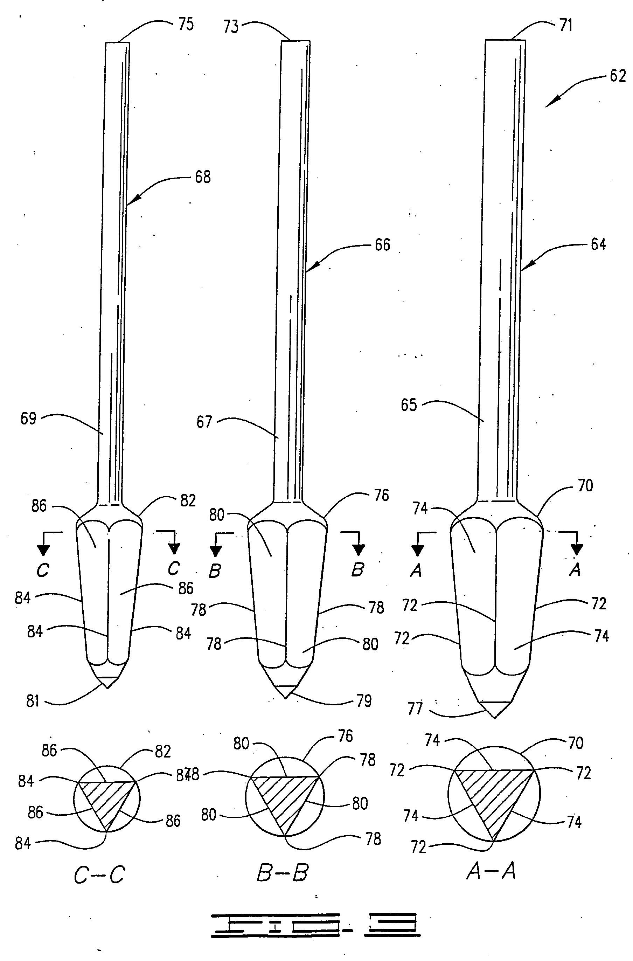

FIG. 3 is an enlarged side view of an endodontic instrument set of the present invention containing three instruments having three cutting edges formed by three vertical flutes on the continuously tapered working lengths thereof including cross-sectional views of the cutting edges and flutes.

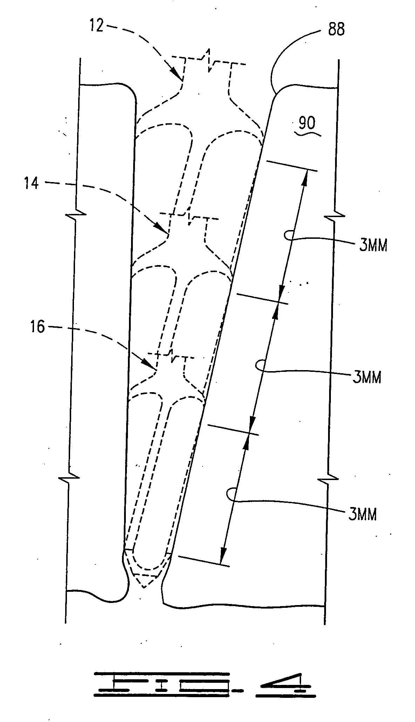

FIG. 4 is an enlarged side view of a root canal showing the position of three instruments of the set of instruments of the present invention illustrated in FIG. 1 after the working portion of each instrument has widened the root canal to a width and length corresponding to the size of the working portion.

As mentioned, the present invention provides a set of instruments of progressively smaller sizes adapted for use in performing root canal therapy. Each of the instruments includes an elongated shaft having a proximal end and a distal end and having a short enlarged continuously tapered working length formed on the shaft adjacent to the distal end. The short enlarged continuous tapered working length includes at least one continuous cutting edge thereon. Preferably, each instrument has multiple cutting edges on the short enlarged continuously tapered working length thereof formed by multiple flutes thereon. The cutting edges and flutes can be parallel to the axes of the instruments, angled or spiraled clockwise or counter-clockwise.

As indicated above, the short enlarged working lengths on the instruments are continuously tapered toward the distal end of the instruments. Preferably, the larger of the set of instruments have working length tapers of 0.1 millimeter per millimeter of length, and at least the smallest one of the set of instruments has a working length taper of 0.05 millimeter per millimeter of length. The short enlarged continuously tapered working lengths of the instruments of the set of instruments of this invention are preferably no longer than about 3 millimeters.

The instruments in the set of instruments can have from 3 to 8 or more cutting edges separated by 3 or more flutes on the short enlarged continuously tapered working lengths thereof. The cross-sections of the working lengths of the instruments can be triangular, square or polygonal.

Referring now to the drawings, FIG. 1 illustrates a set 10 of three instruments 12, 14 and 16 of the present invention including shafts 13, 15 and 17 having proximal ends 19, 21 and 23, respectively, distal ends in the form of bi-conical shapes 25, 27 and 29, respectively, and short enlarged continuously tapered working lengths 18, 24 and 30, respectively, adjacent to the distal ends thereof. The instruments 12, 14 and 16 in the set of instruments 10 has six cutting edges 20, 26 and 32, i.e., three sets of opposing cutting edges, respectively, that are angled forwardly and three flutes 22, 28 and 34, respectively, forming the cutting edges 20, 26 and 32 on the working lengths thereof. The flutes can have curved sides as shown in the cross-sections of FIG. 1, and as also shown the flutes can be spaced apart thereby providing the six cutting edges, whereby the instruments can be rotated clockwise or counter-clockwise while shaping a root canal.

Referring now to FIG. 2, a set 36 of three alternate instruments 38, 40 and 42 are shown including shafts 39, 41 and 43 having proximal ends 45, 47 and 49, respectively, distal ends in the form of bi-conical shapes 51, 53 and 55, respectively, and short enlarged continuously tapered working lengths 44, 50 and 56, respectively, adjacent to the distal ends thereof. Each of the instruments 38, 40 and 42 include six cutting edges 46, 52 and 58, respectively, i.e., three sets of opposing cutting edges, on the short enlarged continuously tapered working lengths 44, 50 and 56 of the instruments. The six cutting edges 46, 52 and 58 are formed by three flat sided flutes 48, 54 and 60, respectively. Like the instruments illustrated in FIG. 1, the instruments of FIG. 2 can be rotated in either direction.

Referring now to FIG. 3, yet another set 62 of three instruments 64, 66 and 68 is shown which is similar to the instrument set of FIG. 2 except that the flat flutes 74, 80 and 86, respectively, are not separated from each other whereby three cutting edges 72, 78 and 84, respectively, are formed on the working lengths 70, 76 and 82, respectively, thereof. The instruments 64, 66 and 68 include shafts 65, 67 and 69 having proximal ends 71, 73 and 75, respectively, distal ends in the form of bi-conical shapes 77, 79 and 81, respectively, and short enlarged continuously tapered working lengths 70, 76 and 82, respectively, adjacent to the distal ends thereof. The instruments 64, 66 and 68 can be rotated clockwise or counter-clockwise while shaping a root canal.

As is understood by those skilled in the art, a variety of cutting edges and flute arrangements can be utilized on the short enlarged continuously tapered working lengths of the set of instruments of this invention in addition to those described above. Generally, the cutting edges can be angled forwardly or backwardly, the cutting edges and flutes can spiral around the working length in a clockwise or counter-clockwise direction, the cutting edges and flutes can be positioned vertically on the working length or the cutting edges and flutes can be formed in a variety of other arrangements known to those skilled in the art.

As shown in FIGS. 1 through 3, the distal ends of each of the instruments are of a bi-conical shape for guiding the distal ends and the short enlarged continuously tapered working lengths of the instruments in the direction of the root canal axis thereby preventing the working lengths of the instruments from moving laterally.

Referring now to FIG. 4, an enlarged view of a root canal 88 in a tooth 90 indicating the position of three instruments 12, 14 and 16 of the instrument set 10 after the root canal 88 has been enlarged thereby is shown. The root canal 88 is widened to a width and length corresponding to the working portion of each instrument thereby forming a smooth tapered shape ready to be filled with a filling material. Typically, the filling material comprises a waxy rubber compound known as gutta percha followed by a cement. As mentioned previously, the working portion of each of the instruments in the instrument set 10 is preferably no longer than about 3 millimeters.

While the portion of the shaft of each instrument between the proximal end thereof and the short enlarged continuously tapered working length thereof is generally smooth, it can optionally include cutting edges thereon for the purpose of engaging a root canal which is curved to assist in widening the root canal. Further, the portion of the shank described above can have an increasing diameter from the working length to the proximal end thereof to thereby increase the flexibility of the shank.

The methods of this invention for performing root canal therapy generally comprise the following steps. A set of instruments of progressively smaller sizes is provided, each having an elongated shaft comprising a proximal end and a distal end and a short enlarged continuously tapered working length formed on the shaft adjacent to the distal end. The short enlarged continuously tapered working length has at least one continuous cutting edge thereon. A first of the instruments is inserted in the coronal portion of the root canal and rotated to enlarge the coronal portion into a short enlarged continuous taper of a size corresponding to the short enlarged continuously tapered working length of the first instrument. Thereafter, a second and one or more additional instruments having progressively smaller short enlarged continuously tapered working lengths are inserted in the root canal and each instrument is rotated to thereby enlarge the root canal to the foramina thereof into an enlarged continuous taper of a size corresponding to the short enlarged continuously tapered working lengths of the first, second and one or more additional instruments.

A preferred set of instruments of progressively smaller sizes adapted for use in performing root canal therapy of this invention comprises: each of the instruments having an elongated shaft comprising a proximal end and a distal end and a short enlarged continuously tapered working length formed on the shaft adjacent to the distal end; and the short enlarged continuously tapered working length having at least one continuous cutting edge thereon.

A preferred method of performing root canal therapy of this invention comprises the steps of:
(a) providing a set of instruments of progressively smaller sizes, each having an elongated shaft comprising a proximal end and a distal end and a short enlarged continuously tapered working length formed on the shaft adjacent to the distal end, the short enlarged continuously tapered working length having at least one continuous cutting edge thereon;
(b) inserting a first of the instruments in the coronal portion of the root canal and rotating the instrument to enlarge the coronal portion into a short enlarged continuous taper of a size corresponding to the short enlarged continuously tapered working length of the first instrument; and
(c) inserting a second and one or more additional instruments having progressively smaller short enlarged continuously tapered working lengths in the root canal and rotating each instrument to thereby enlarge the root canal to the foramina thereof into an enlarged continuous taper of a size corresponding to the short enlarged continuously tapered working lengths of the first, second and one or more additional instruments.

Thus, the present invention is well adapted to carry out the objects and attain the ends and advantages mentioned as well as those which are inherent therein. While numerous changes can be made by those skilled in the art, such changes are encompassed within the spirit of this invention as defined by the appended claims.

## Claims

1. An instrument for use in performing root canal therapy comprising:
an elongated shaft comprising a proximal end and a distal end and a short enlarged continuously tapered working length formed on the shaft adjacent to the distal end, and
the short enlarged continuously tapered working length having at least one continuous cutting edge thereon.

2. An instrument according to claim 1 having multiple cutting edges on the short enlarged continuously tapered working length thereof formed by multiple flutes thereon.

3. An instrument according to claim 2 wherein the cutting edges and flutes are parallel to the axes of the instrument, are angled or are spiralled clockwise or counter-clockwise.

4. An instrument according to claim 1, 2 or 3 having three cutting edges on the short enlarged continuously tapered working length thereof formed by three flutes thereon.

5. An instrument according to claim 1, 2 or 3 having six cutting edges on the short enlarged continuously tapered working length thereof formed by three flutes thereon.

6. An instrument according to any one of the preceding claims wherein the cross-sectional shape of the short enlarged continuously tapered working length of the instrument is triangular with concave sides, triangular, square or polygonal.

7. An instrument according to any one of the preceding claims wherein the short enlarged continuously tapered working length of the instrument is no longer than 3 millimetres.

8. An instrument according to any one of the preceding claims wherein the distal end of the instrument is of a bi-conical shape for guiding the distal end and the short enlarged continuously tapered working length of the instrument in the direction of the root canal axis.

9. An instrument according to any one of the preceding claims wherein the shaft of the instrument between the proximal end thereof and the short enlarged continuously tapered working length thereof includes flutes and cutting edges thereon that engage a root canal when the root canal is curved.

10. An instrument according to any one of the preceding claims wherein the shaft of the instrument between the proximal end thereof and the short enlarged continuously tapered working length thereof has an increasing diameter from the short enlarged continuously tapered working length to the proximal end.

11. A set of instruments adapted for use in performing root canal therapy, each instrument being in accordance with any one of the preceding claims, and the set comprising a plurality of such instruments of progressively small sizes.

12. The set of instruments of claim 11 wherein the larger instruments of the set of instruments have short enlarged working length tapers of 0.1 millimetre per millimetre of length and at least the smallest one of the set of instruments has a short enlarged working length taper of 0.05 millimetre per millimetre of length.
